# EUROPEAN PATENT APPLICATION

(11) **EP 1 040 759 A2**
(43) Date of publication of application: **04.10.2000**
(21) Application number: 00106737.0
(22) Date of filing: 29.03.2000
(51) Int. Cl.: A23C 9/13

(54) **Two-layered yogurt product in container comprising sauce on top of yogurt**

(30) Priority: 29.03.1999 JP 8607399; 27.03.2000 JP 2000085577
(71) Applicant: SNOW BRAND MILK PRODUCTS, CO., LTD., Sapporo-shi Hokkaido 065-0043 (JP)
(72) Inventor: Akai, Yoshihito, Kanagawa-ken (JP); Kageyama, Ryoji, Saitama-ken (JP); Ikuyama, Ken, Kawagoe-shi, Saitama-ken (JP)
(74) Representative: VOSSIUS & PARTNER

(57) **Abstract**

A two-layered yogurt in a container is produced by first filling yogurt using milk as its main ingredient in a container, and next filling on top of the yogurt a sauce comprising sugars, stabilizers and an emulsifying agent with a Brix degree of 10~25, wherein the stabilizers are 1.0~1.5 weight % and the emulsifying agent is 0.1~1.0 weight %. The two-layered yogurt is also produced by subsequent-fermentation by filling a yogurt mix using milk as its main ingredient, and filling on top of the yogurt mix a sauce with a smaller specific gravity value than that of the yogurt mix, which sauce contains 0.1~1.5 weight % of stabilizers and 0.01~1.0 weight % of an emulsifying agent, and then fermenting the yogurt mix. Turbidity of the sauce and the yogurt during production, distribution, and storage is controlled, the boundary between the sauce and the yogurt is clearly distinguished.

## Description

This invention relates to a two-layered yogurt contained in a container with sauce filled in an upper layer and yogurt in a lower layer and a method of producing it. A two-layered yogurt contained in a container according to this invention has the sauce filled in the upper layer and, unlike a conventional two-layered yogurt with the sauce filled in the lower layer, the sauce does not require stirring up from the bottom of the container when eating it

Conventionally, in most cases of two-layered yogurt products in a container with yogurt and sauce that are sold on the market, the sauce whose specific gravity value is larger is filled in a lower layer and the yogurt whose specific gravity value is smaller than the sauce is filled in an upper layer. For this two-layered yogurt, such a method that the sauce with a larger specific gravity value is first filled in a container and a yogurt mix is then filled and fermented, or a method that after the sauce is filled, the yogurt is filled on top of the sauce are adopted. According to these production methods, production processes can be simplified and there are almost no problems wherein the sauce in the lower layer and the yogurt in the upper layer become turbid during production, distribution or storage, and wherein the boundary between the sauce in the lower layer and the yogurt in the upper layer becomes unclear.

There is a problem that the sauce or the yogurt spills from the container when stirred, because the Sauce filled in the lower layer must be stirred up from the bottom to mix it with the yogurt in the upper layer. Therefore, in most cases, because the upper-layered yogurt is eaten first, and the sauce in the lower layer is then eaten, two-layered yogurt packed in a container does not provide well-balanced taste.

Additionally, as another form, there is a form of using separate containers: Yogurt and sauce are distributed as a set being contained separately in each container and the sauce is poured on the yogurt when eating the yogurt. However, it is unavoidable that this method has problems in that it not only increases the cost but also it is troublesome for consumers.

For these reasons, the two-layered yogurt in a container with sauce in the upper layer and yogurt in the lower layer has been considered. This is a production method wherein a yogurt mix is first filled and after it is fermented, it is cooled down to bake it, and then sauce is filled on top of the yogurt. However, because this production method ferments the yogurt mix and then cakes it, the process takes considerable time, and because a container has to be stood up with the top open during the process, not only does the process becomes complex, but also there is a problem of microbial contamination.

Moreover, because sauce whose specific gravity value is larger is filled above the yogurt, both layers become turbid, appearance and taste are spoiled, and it deteriorates to a product with low product value. For these reasons, a two-layered yogurt m a container using the sauce with a larger specific gravity value filled in the upper layer have never been produced on an industrial scale and have never been put on the market as well.

This invention has been reviewed in view of such a situation. Its object is to provide a two-layered yogurt in a container, which comprises rich sauce filled in the upper layer and a rich flavored yogurt in the lower layer, which does not become turbid during the production process or in storage and for which the original taste of the sauce is not lost and to provide a production method for the same.

A yogurt according to this invention is a two-layered yogurt in a container, which comprises sauce in an upper layer and yogurt using milk as its main ingredient.

Regarding the two-layered yogurt according to this invention, there is an advance-fermentation type two-layered yogurt in a container, wherein yogurt is filled in a container and sauce with a relatively smaller specific gravity value than that of the yogurt mix is filled in on top, and a subsequent-fermentation type two-layered yogurt in a container, in which a yogurt mix is filled in a container and sauce with a smaller specific gravity value than that of the yogurt mix is filled in on top.

In the case of the two-layered yogurt in a container, sauce and yogurt do not mix during the distribution phase and during the storage and the layers are clearly separate.

In the above, the advance-fermentation type two-layered yogurt in a container can be produced by filling sauce on top of a fermented yogurt curd in a container, whereas the subsequent-formentation type two-layered yogurt in a container can be produced by filling sauce on top of a liquid yogurt mix. Thus, due to the above difference in production, the composition of sauce for the advance-fermentation type and the sauce for the subsequent-fermentation type may be different.

First, the advance-fermentation type two-layered yogurt according to this invention is explained. The sauce in an upper layer has a Brix degree (BX) of 10∼25 (sugar level) and contains stabilizers of 1.0∼1.5 weight % and an emulsifying agent of 0.1∼1.0 weight % and its relative specific gravity value is reduced.

The sauce is prepared by mixing raw materials including sugars, stabilizers and an emulsifying agent and sterilizing them by heating according to the conventional method. The sauce can be kept in cold storage by cooling it or can also be kept at room temperature until it is used. The sauce has a Brix degree of 10∼25 and a specific gravity value of approximately 1.05∼1.11. It has a lower Brix degree and a smaller specific gravity value than the sauce conventionally filled in a lower layer (a Brix degree of approximately 40∼50 and a specific gravity value of approximately 1.18).

The reason for setting the sugar level at 10∼25 is that its richness can be preserved without losing its original flavor and sweetness. At the same time, by reducing its specific gravity value as much as possible, the sauce does not become turbid when it is filled on top of the yogurt during production, distribution, and in storage. Additionally, the reason for containing stabilizers of 1.0∼1.5 weight % is to moderately mix the sauce with the yogurt without gel formation of the sauce itself when being eaten, as well as to improve its fixation. If the stabilizer content is less than 1.0 weight %, the above-mentioned effects cannot be achieved. On the other hand, if it exceeds 1.5 weight %, viscosity becomes high and taste may deteriorate, hence it is preferable to include it by 1.0∼1.5 weight %. The reason for containing an emulsifying agent of 0.1∼1.0 weight % is that it facilitates spreading of the sauce on the yogurt surface during the production process, and it prevents moisture from separating from the sauce during production, distribution, and storage, and a boundary between the yogurt and the sauce becomes clear. The above-mentioned effects will not be achieved if the emulsifying agent content is less than 0.1 weight %. On the other hand, if it exceeds 1.0 weight, %, the taste of the emulsifying agent can be detected, hence it should be contained at 0.1∼1.0 weight %.

The advance-fermentation type two-layered yogurt in a container is explained first. Yogurt using milk as its main ingredient is filled in a container, sauce such as the above-mentioned is then filled, an opening is sealed by a lid material and the yogurt and the sauce in the container are cooled to 5∼10°C (41∼50°F). At this time, it is preferable to have a filling ratio of sauce to yogurt of 1∼3 to 7∼9 in view of taste and appearance.

The subsequent-fermentation type two-layered yogurt according to this invention is explained next. The sauce in the upper layer has a smaller specific gravity value than that of the yogurt mix and contains stabilizers of 0.1∼1.5 weight % and an emulsifying agent of 0.01∼1.0 weight %. The sauce may have a Brix degree (BX) of 10∼40.

The sauce is prepared by mixing raw materials including sugars, stabilizers and an emulsifying agent and sterilizing them by heating according to the conventional method. The sauce can be kept in cold storage by cooling it or it can also be kept at room temperature until it is used.

The reason for setting a specific gravity value of the sauce smaller than that of the yogurt mix is to prevent moisture from separating from the sauce during production, distribution, and storage, to prevent the sauce from mixing with the yogurt mix and to make a boundary between the yogurt and the sauce clear. Normally, to reduce a specific gravity value of the sauce, moisture content of the sauce is increased. However, if moisture content is increased, moisture can easily separate and the sauce easily mixes with the yogurt mix. For the sauce according to this invention, stabilizers and an emulsifying agent are added and by adjusting their types and amounts, turbidity of the sauce and the yogurt mix can be controlled. Additionally, The reason for containing stabilizers of 0.1∼1.5 is to moderately mix the sauce with the yogurt when being eaten without gel formation of the sauce itself and at the same time to improve its fixation. If the stabilizer content by percentage is less than 0.1 weight %, the above-mentioned effects cannot be achieved. On the other hand if it exceeds 1.5 weight %, viscosity becomes high and the taste may deteriorate, so it is preferable to include it at 0.1∼1.5 weight %. The reason for containing an emulsifying agent of 0.01∼1.0 weight % is because it facilitates spreading of the sauce on the yogurt surface during production, it prevents moisture from separating from the sauce during production and distribution, and it can make a boundary between the yogurt and the sauce clear. The above-mentioned effects will not be achieved if the emulsifying agent content is less than 0.01 weight %. On the other hand, if it exceeds 1.0 weight %, the taste of the emulsifying agent can be detected, so it should be contained at 0.01∼1.0 weight %.

The subsequent-fermentation type two-layered yogurt in a container can be produced as follows: First, a yogurt mix using milk as its main ingredient to which a lactic acid bacterium starter is inoculated is filled in a container, it is then fermented at 30∼45°C (86∼113°F) and after it is fermented, it is cooled to 5∼10°C (41∼50°F).

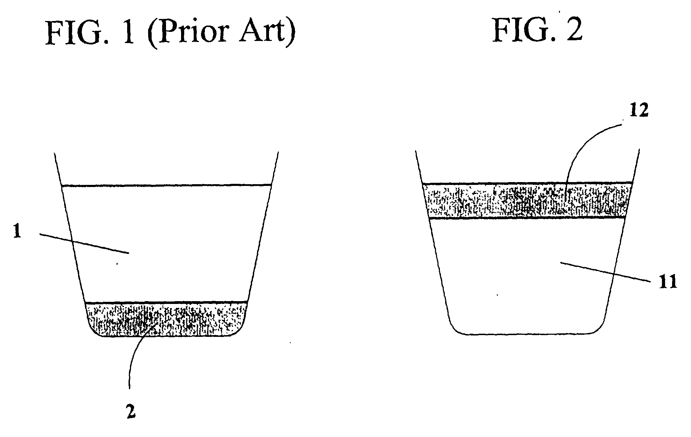

Figure 1 shows a two-layered yogurt in a container comprising yogurt 1 and Sauce 2 conventionally sold on the market. The sauce with a larger specific gravity value is filled in a lower layer and the yogurt with a smaller specific gravity value than that of the sauce is filled in an upper layer.

Figure 2 shows a two-layered yogurt in a container according to the present invention, wherein sauce 12 is placed on top of yogurt 11 in a container.

A two-layered yogurt in a container, which comprises sauce prepared according to this invention in an upper layer and yogurt using milk as its main ingredient in a lower layer, can be illustrated as an advance-fermentation type two-layered yogurt in a container for which a yogurt mix is prepared, yogurt fermented in advance is filled in a container and sauce is filled on top of it and a subsequent-fermentation type two-layered yogurt in a container for which a yogurt mix to which a lactic acid bacterium starter is inoculated is prepared and filled in a container and it is then fermented.

In the above, the sauce for the advance-fermentation type two-layered yogurt in a container and the sauce for the subsequent-fermentation type two-layered yogurt in a container are respectively formulated in accordance with their production processes.

The advance-fermentation type two-layered yogurt in a container is produced by filling yogurt in a container and filling the sauce on the top of it.

For the advance-fermentation type two-layered yogurt in a container, the main ingredients of the sauce in tho upper layer are sugars, stabilizers and an emulsifying agent. It is prepared by mixing and dispersing sugars, stabilizers and an emulsifying agent in water and sterilizing the sauce by heating according to conventional methods. The sauce can be kept in cold storage by cooling it or it can also be kept at room temperature until it is used. Additionally, depending on a targeted end product, fruit juice, fruit solid, food colors, and flavoring can be added properly.

In order not to become turbid during production, distribution, and storage, a Brix degree (BX) of this sauce is set at 10∼25 and its specific gravity is kept at a relatively small value (1.05∼1.11). Furthermore, the types and amounts of the stabilizers and the emulsifying agent to be mixed are controlled. The reason for controlling the Brix degree (BX) to 10∼25 is to give richness without spoiling the original taste and sweetness. At the same time reducing the specific gravity as much as possible prevents the sauce from becoming turbid when filling it on top of the yogurt during production, distribution, and storage.

As sugars to be mixed into the sauce, sugars such as sucrose, glucose, fructose and isomerized sugar or more than one of these sugars can be used. Artificial sweeteners such as Stevia and Aspartame can also be mixed with the sugars.

As stabilizers to be mixed into the sauce, locust bean gurn of 80∼90 weight % is used as the main stabilizer and in addition, more than one stabilizer selected from xanthene gum, 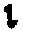 -carragenan, LM pectin, etc. are mixed in at 10∼20 weight %. The reason for mixing the stabilizers is to moderately mix the sauce with the yogurt without gel formation of the sauce itself when being eaten, as well as to improve its fixation. The reason for mixing locust bean gum as the main stabilizer by 80∼90 weight % is to achieve the above-mentioned effects most remarkably. It is preferable to mix the stabilizers in the sauce at 1.0∼1.5 weight %. If its content by percentage is less then 1.0 weight %, the above-mentioned effects cannot be achieved. If it exceeds 1.5 weight %, it is undesirable because viscosity becomes high and taste may deteriorate.

As an emulsifying agent to be mixed into the sauce, glycerin fatty acid ester, polyglycerin fatty acid ester and sugar ester can be mentioned. The reasons for mixing the emulsifying agent is to prevent moisture from separating from the sauce during production, distribution or storage, and to clarify a boundary between the yogurt and the sauce. It is preferable to mix the emulsifying agent in the sauce at 0.1∼1.0 weight %. It is undesirable to mix it beyond this scope, because these effects cannot be achieved if the mixed amount is less than 0.1 weight % and the taste of the emulsifying agent can be detected if it exceeds 1.0 weight %.

Additionally, in the advance-fermentation type two-layered yogurt in a container, as yogurt in the lower layer, yogurt using milk as its main ingredient, which is fermented using lactic acid bacterium according to conventional methods, is used. Oils and fats, sugars, stabilizers, etc. can be mixed into this yogurt as the need arises. When these sub-ingredients are added, they can be mixed into the yogurt obtained by fermenting milk or if there is no difficulty in fermentation, fermentation can be done after they are mixed into the main ingredient.

In the production method of the advance-fermentation type two-layered yogurt in a container, after preparing the sauce and the yogurt as stated above, the yogurt is first filled in a plastic container, etc. for an individual serving. The sauce prepared as stated above is next filled in on top of the yogurt. The filling ratio of the sauce to yogurt should be 1∼3 to 7∼9. This filling ratio is preferable in view of taste and appearance. After filling the yogurt and the sauce in this manner, the opening of the container is sealed with a lid material and a two-layered yogurt in a container can be obtained by cooling it to 5∼10°C (41∼50°F). Because the yogurt obtained is produced by the method using prepared yogurt, wherein the prepared yogurt is filled in the container and the sauce is then filled in on top of the yogurt, there is no such a problem that productivity is lowered because it takes more cooling time during a filling process. The yogurt can be produced continuously and the sauce and the yogurt do not become turbid at the time of filling, as the sauce with a relatively small specific gravity value is filled. Moreover, because stabilizers and an emulsifying agent are added at a specified amount, moisture does not separate out even though moisture content is high, and moisture containing the sauce's color does not become turbid with the yogurt. Further, as compared with conventional sauce, the yogurt according to the present invention tastes sweet in spite of its low Brix degree and preserves richness is preserved.

A subsequent-fermentation type two-layered yogurt in a container is produced by filling a yogurt mix in a container, filling sauce on top of the yogurt and fermenting it.

In the subsequent-fermentation type two-layered yogurt in a container, the sauce in an upper layer has a sweetener, stabilizers and an emulsifying agent as its main ingredients. It is prepared by mixing and dispersing the sweetener, stabilizers and emulsifying agent in water, sterilizing the mix at approximately 95°C (203°F) and deaerating it. It can be kept in cold storage by cooling or can also be kept at room temperature. Depending on a targeted end product, a suitable amount of fruit juice, fruit solid, food colors, flavoring, etc. can be added to the sauce. To prevent the sauce and the yogurt from becoming turbid during production, particularly at the time of filling, or to prevent the sauce and the yogurt from becoming turbid during distribution or storage, a specific gravity value of the sauce is made to be smaller than that of the yogurt mix and the types and amounts of stabilizers and emulsifying agents are adjusted. In general, because moisture content of the sauce becomes higher and moisture easily separates if a specific gravity value of the sauce is made to be smaller, the sauce easily mixes with the yogurt mix. In the case of the subsequent-fermentation method, turbidity of the sauce and the yogurt mix easily occurs, as compared with the advance-fermentation method for filling yogurt whose texture has been formed, because the sauce is filled over a liquid yogurt mix. However, in this invention, because the types and mixed amount of the stabilizer and emulsifying agent are adjusted, the turbidity of the sauce and the yogurt mix can be controlled.

As stabilizers to be mixed into the sauce, for example, guar gum, xanthene gum, carrageenan, 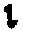 -carragenan and LM pectin can be used. These can be used properly in a combination. Particularly, it is preferable to mix guar gum 50∼90 weight % as the main stabilizer and more than one from stabilizers such as xanthene gurn, carrageenan, 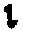 -carragenan and LM pectin by 10∼20 weight %. By mixing more than one of xanthene gum, carrageenan, 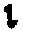 -carragenan and LM pectin, viscosity is added to the sauce, turbidity of the sauce and the yogurt at the time of filling is prevented, desirable viscosity for mixing the sauce into the yogurt when being eaten is added, and fixation of the sauce is also improved. Thus, it is preferable to mix stabilizers at 0.1∼1.5 weight % in the sauce. The above-mentioned effects cannot be achieved if the mixed amount of stabilizers is less than 0.1 weight %. On the other hand, if it exceeds 1.5 weight %, it is not preferable because the viscosity becomes too high and filling properties deteriorate.

As an emulsifying agent that is mixed into the sauce, for example, glycerin fatty acid ester, polyglycerin fatty acid ester and sugar ester can be used. It is preferable to mix the emulsifying agent by 0.01∼1.0 weight % in the sauce. Adding the emulsifying agent makes it easier for the sauce to spread on the yogurt mix surface during production, and a boundary between the sauce and the yogurt can be clarified by preventing moisture separation from the sauce and color run from the sauce to the yogurt during production, distribution, and storage. If the added amount is less than 0.01 weight %, the above-mentioned effects cannot be achieved. On the other hand, if it exceeds 1.0 weight %, it is undesirable, because the taste of the emulsifying agent can be strongly detected.

As sugars that are mixed into the sauce, sugars such as sucrose, glucose, fructose and isomerized sugar and artificial sweeteners such as erythritol, Stevia and Aspartame can be used. It is preferable to use more than one of them.

Furthermore, in the subsequent-fermentation type two-layered yogurt in a container, as a yogurt mix in the lower layer, a yogurt mix using milk as its main ingredient, which can be prepared according to conventional methods, can be used. For example, the subsequent-fermentation type two-layered yogurt in a container can be prepared with whole fat milk, nonfat milk, nonfat powdered milk, etc. as the main ingredient by adding sugars, oils and fats, etc. to the main ingredient, heating the mix to 50∼60°C (122∼140°F), adding stabilizers such gelatin, agar, etc. if necessary by dissolving them in advance, then homogenizing, sterilizing, and cooling the yogurt mix to approximately 40∼45°C (104∼113°F). A lactic acid bacterium starter is then inoculated to the yogurt mix prepared in this way, the yogurt is filled in a plastic container, etc. for an individual serving, after the sauce is filled in over the yogurt, the opening of the container is sealed, the yogurt mix is fermented at 30∼45°C (86∼113°F), and after fermentation is completed, the yogurt is cooled to 5∼10°C (41∼50°F). It is additionally preferable that the filling ratio of the sauce and the yogurt mix is 1-3 to 7∼9 in view of taste and appearance.

For the two-layered yogurt obtained in this manner, the specific gravity value of the sauce in the upper layer is smaller than that of the yogurt mix in the lower layer, Furthermore, because the types and added amounts of stabilizers and emulsifying agents are devised, turbidity of the sauce and the yogurt mix during production, distribution, and storage is controlled. Moreover, according to the production method of this invention, by filling the yogurt mix in the container and fermenting it, the two-layered yogurt can be produced easily.

Test examples to clarify the effects of this invention are shown in the following:

### [Test Example 1]

### (1) Preparation of yogurt

A yogurt mix was prepared by adding and dissolving 10 weight % of nonfatmilk powder, 2 weight % of salt-free butter, and 5 weight % of sugar in water, heating the mixture to 60°C (140°F) in hot water, homogenizing the mixture, sterilizing it by keeping it at 95°C (203°F) for five minutes, and cooling it to 40°C (104°F). Yogurt was prepared by adding 3 weight % of a mixed starter which comprised two bacteria, Lactobacillus bulgaricus and Streptococcus thermophilus, to the mix, and fermenting it at 40°C (104°F) until the acidity of lactic acid reached 1.1%. After homogenizing this yogurt with a homogenizer without applying pressure, it was cooled to 10°C (50°F) while being stirred.

### (2) Preparation of sauce

As shown in Table 1, six different types of sauce were prepared by mixing liquid sugars, stabilizers, an emulsifying agent, 4-times concentrated strawberry juice, citric acid and some flavoring, dispersing and dissolving them, and adjusting the pH to 3.5, to obtain a sauce. After sterilizing the sauce by heating it at 95°C (203°F) for 10 minutes, it was kept at 10°C (50°F).

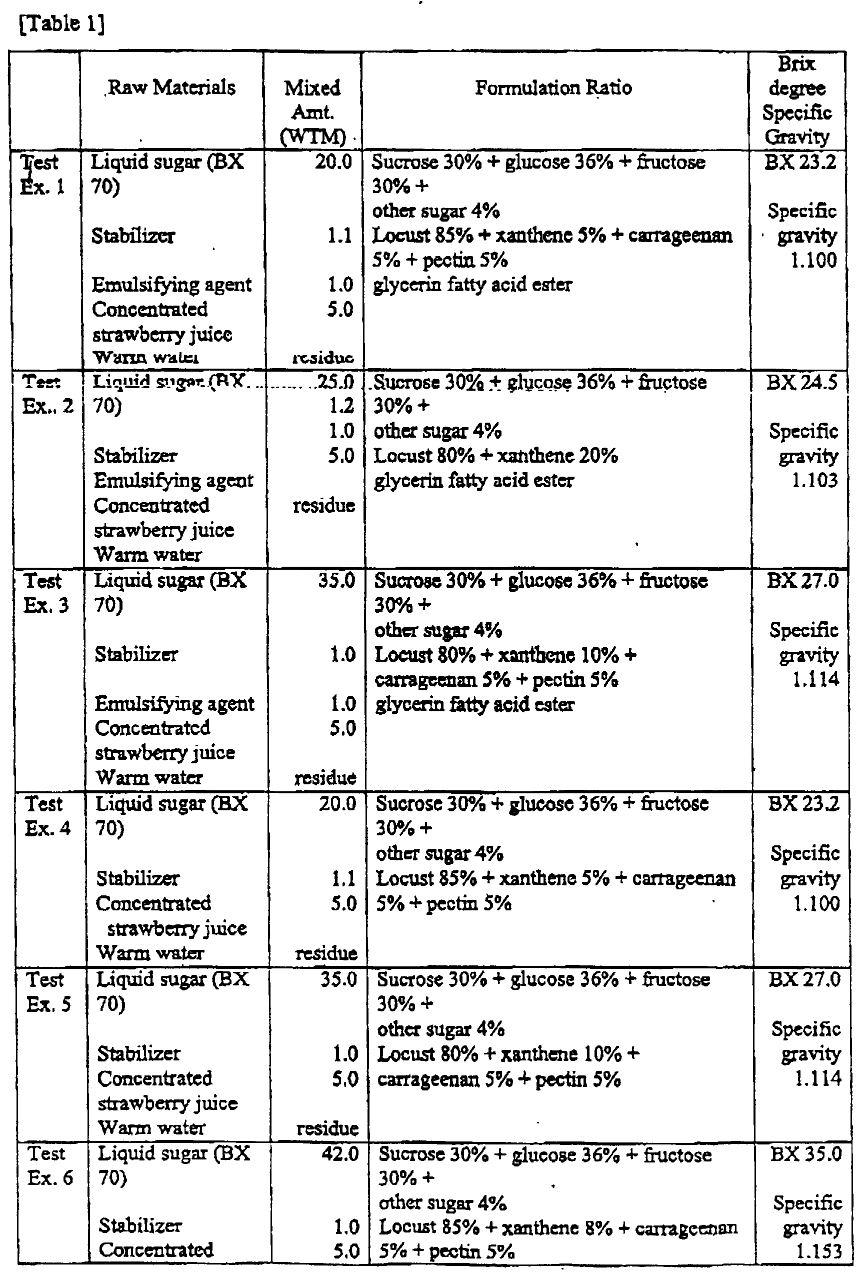

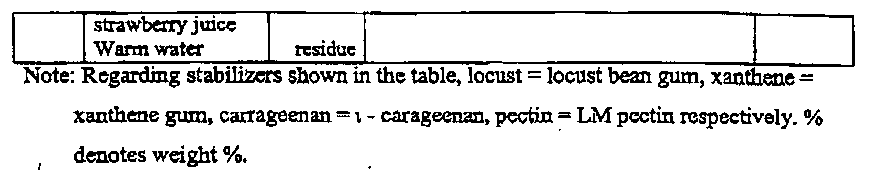

### (3) Preparation of the advance-fermentation type two-layered yogurt

An advance-fermentation type two-layered yogurt was prepared by filling 85ml of the yogurt prepared in (1) above in a transparent plastic container with 120ml capacity, filling 20ml of the sauce obtained in test examples 1-6 shown in Table 1 above on top of the yogurt and sealing the container.

### (4) Stability test of the sauce

Observed and evaluated were a precipitation degree of the sauce immediately after the preparation of the advance-fermentation type two-layered yogurt in (3) above, and water separation, clearness of color, and precipitation of the sauce in the yogurt after being stored in a refrigerator at 10°C (50°F) for two weeks. The results are shown in Table 2 below.
Grading values used in the table represent the following:
5: Not observed
4: Slightly observed
3: Clearly observed
2: Considerably observed
1: Seriously observed

**[Table 2]**

| | Immediately after production | Two weeks after production | |
|---|---|---|---|
| | Sauce precipitation | Moisture separation & color spread | Sauce precipitation state |
| Test Example 1 | 5 | 5 | 5 |
| Test Example 2 | 5 | 5 | 5 |
| Test Example 3 | 4 | 5 | 3 |
| Test Example 4 | 3 | 2 | 3 |
| Test Example 5 | 3 | 1 | 1 |
| Test Example 6 | 2 | 1 | 1 |

As clearly shown in Table 2, in the case of the sauces in test examples 1 and 2 having a Brix degree (BX) of less than 25 for which the stabilizers and emulsifying agent were mixed simultaneously, precipitation, moisture separation or color run were not observed not only immediately after production but also two weeks after production. This was because their Brix degree (BX) was less than 25, and hence the sauce's specific gravity value was relatively small. The added stabilizers and emulsifying agent also achieved remarkable effects.

As compared with these examples, in the case of test example 3, the stabilizers and emulsifying agent were added simultaneously, but because the Brix degree (PX) was more than 25 and its specific gravity value was large, slight precipitation of the sauce was observed immediately after production and the precipitation increased after having been stored for two weeks. As for test examples 4∼6, because only stabilizers were added and no emulsifying agent was added, even in the case of test example 4 with its relatively small specific gravity value, precipitation of the sauce was observed immediately after production. Particularly, in the case of test examples 5 and 6 with large specific gravity values, heavy precipitation of the sauce was observed immediately after production and after being stored for two weeks. Along with precipitation, moisture separation and color run were observed and the yogurt become worthless as a product.

Consequently, by maintaining the sauce's specific gravity value relatively small within a specified range as well as by simultaneously adding the stabilizers and emulsifying agent to the sauce to be filled in the upper layer of the two-layered yogurt in a container, the advance-fermentation type two-layered yogurt in a container without sauce precipitation and color run and with a clear boundary can be produced.

### [Test Example 2]

### (1) Preparation of sauce

According to the mixture shown in Table 1, after mixing tangerine segments, tangerine juice, an emulsifying agent (glycerin fatty acid ester), stabilizers (guar gum, xanthene gum and pectin), sweeteners (refined sugar and sucralose), flavoring and water and dispersing and dissolving powdered materials into the liquid, the mixture was sterilized at 95°C (203°F) for 10 minutes, five different types of sauce were prepared and were kept at 10°C (50°F). Specific gravity and the Brix degree of each sauce are shown in Table 3.

**[Table 3]**

| | Mixed Amount (Weight %) | | | | |
|---|---|---|---|---|---|
| | Sauce 1 | Sauce 2 | Sauce 3 | Sauce 4 | Sauce 5 |
| Materials | | | | | |
| Tangerine segments | 50 | 50 | 50 | 50 | 50 |
| Tangerine juice | 2.7 | 2.7 | 2.7 | 2.7 | 2.7 |
| Glycerin fatty acid ester | 0.2 | 0.2 | 0.2 | 0 | 0 |
| Guar gum | 0.2 | 0.2 | 0 | 0.2 | 0 |
| Xanthene gum | 0.1 | 0.1 | 0 | 0.1 | 0 |
| Pectin | 0.3 | 0.3 | 0 | 0.3 | 0 |
| Refined sugar | 11 | 0 | 0 | 0 | 0 |
| Sucralose | 0 | 0.05 | 0.05 | 0.05 | 0.05 |
| Water | 35.5 | 46.45 | 47.05 | 46.65 | 47.25 |
| Specific gravity | 1.080 | 1.026 | 1.020 | 1.032 | 1.019 |
| Brix degree | 18.46 | 5.55 | 4.76 | 5.22 | 4.60 |

### (2) Production of the subsequent-fermentation type two-layered yogurt in a container

A yogurt mix (with a specific gravity value of 1.060 and a Brix degree of 17.7) was prepared by mixing and dissolving 10 weight % of non-fat powdered milk, 2 weight % of salt-free butter, 5 weight % of sugar, and 80 weight % of water, heating the mixture in hot water at 60°C (140°F), homogenizing it, sterilizing it by keeping it at 95°C (203°F) for five minutes and cooling it to 40°C (104°F). 3 weight % of a mixed starter, which comprised two bacteria, Lactobacillus bulgaricus and Streptococcus thermophilus, was mixed into this yogurt mix and the mix was filled to 85ml in each of four transparent plastic containers with 120ml capacity. 20ml of the sauce prepared in (1) above was filled on top of the yogurt mix in each container, the openings were sealed with a lid, the yogurt was fermented at 40°C (104°F) until the acidity of lactic acid reached 1.0% and two each of five different types of the subsequent-fermentation type two-layered yogurt in a container were produced.

### (3) Stability test of the advance-fermentation type sauce

The subsequent-fermentation type two-layered yogurt products produced in (2) above were stored at 10°C (50°F) for two weeks, and the condition of the sauce and the yogurt was observed by eye immediately after production and two weeks after production.

Turbidity and the sauce position were observed immediately after the production. Turbidity was rated using O (a state where the sauce and the yogurt are clearly separated) and X (a state where the sauce becomes turbid with the yogurt). The position of the sauce was rated using O (the sauce is on top of the yogurt), Δ (a part of the sauce sinks in the yogurt) and X (the sauce sinks in the yogurt).

Two weeks after production, the sauce's color run and position were observed. Color run was rated using O (no color run and a clear boundary between the sauce and the yogurt observed) and X (because of a color run from the sauce to the yogurt, the boundary is unclear). The sauce's position was rated in the same way as the above. The results are shown below.

**[Table 4]**

| Two-layered Yogurt | | | | | |
|---|---|---|---|---|---|
| | Sauce 1 | Sauce 2 | Sauce 3 | Sauce 4 | Sauce 5 |
| Immediately after production | | | | | |
| Turbidity | O | O | X | O | X |
| Position | X | O | Δ | O | Δ |
| Two weeks after production | | | | | |
| Color run | O | O | O | X | X |
| Position | X | O | Δ | O | Δ |

Of the sauces 2∼5 that had smaller specific gravity values than that of the yogurt, sauces 2 and 4 did not precipitate immediately after production nor two weeks after production. Precipitation was not observed for sauces 3 and 5, but they became turbid with the yogurt when being filled.

Additionally, for sauces 1, 2 and 4 into which stabilizers were mixed, a boundary with the yogurt was clear and the sauce did not become turbid. On the other hand, sauces 3 and 5 into which stabilizers were not mixed became turbid with the yogurt mix when being filled.

Furthermore, for sauces 1, 2 and 3 into which the emulsifying agent was mixed, there was no color run from the sauce to the yogurt two weeks after production and the boundary was clear. For sauces 4 and 5 into which the emulsifying agent was not mixed, color run occurred from the sauce to the yogurt after being stored for two weeks.

From the above, it was found that turbidity of the sauce and the yogurt at the time of filling and color run after storage could be controlled by mixing stabilizers and an emulsifying agent into the sauce and making the specific gravity value of the sauce smaller than that of yogurt.

### [Example]

By showing examples of this invention in the following, this invention is explained more specifically:

### Example 1

### (1) Preparation of yogurt

A yogurt mix was prepared, after mixing and dissolving 10 weight % of nonfat milk powder, 2 weight % of salt-free butter, and 5 weight % of sugar, heating the mixture to 60°C (140°F) in hot water, homogenizing it, sterilizing it by keeping it at 95°C (203°F) for five minutes and cooling it to 40°C (104°F). Yogurt was prepared by adding 3 weight % of a starter mix, which comprised two bacteria, Lactobacillus bulgaricus and Streptococcus thermophilus, to the mix, and culturing it at 40°C (104°F) until the acidity of lactic acid reached 1.1%. After homogenizing this yogurt with a homogenizer without applying pressure, it was cooled to 10°C (50°F) while being stirred.

### (2) Preparation of sauce

20 weight % of sucrose-added glucose-fructose liquid sugar (BX70), 0.5 weight % of stabilizers (85% of locust bean gum + 1% of xanthene gum + 1% of 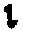 -carragenan + 13% of LM pectin), 0.3 weight % of an emulsifying agent (glycerin fatty acid ester), 5 weight % of 4-times concentrated strawberry juice, 4 weight % of strawberry purée, 0.1 weight % of flavoring were mixed and dispersed in water and the entire amounted to 100%. After citric acid was added to this mixture to adjust the pH to 3.5, it was heated to 95°C (203°F) to dissolve the above ingredients, deaerated and cooled to 10°C (50°F). The sauce obtained had a Brix degree of 23.8 and a specific gravity of 1.108.

### (3) Preparation of the advance-fermentation type two-layered yogurt in a container

The advance-fermentation type two-layered yogurt in a container was obtained by filling 85ml of the yogurt prepared in (1) above in a transparent plastic container with 120ml capacity, filling 20ml of the sauce obtained in (2) above on top of the yogurt and sealing the container.

For the advance-fermentation type two-layered yogurt in the container obtained above, no turbidity of the sauce and the yogurt was observed at the time of filling, and even after being stored for two weeks, color run and precipitation of the sauce was controlled.

### Example 2

### (1) Preparation of yogurt

A yogurt mix was prepared, after mixing and dissolving 9 weight % of nonfat milk powder, 2 weight % of salt-free butter, and 3 weight % of sugar in water, heating the mixture to 60°C (140°F) in hot water, homogenizing the mixture, sterilizing it by keeping it at 95°C (203°F) for five minutes, and cooling it to 38°C (100.4°F). Yogurt was prepared by adding 3 weight % of a mixed starter, which comprised two bacteria, Lactobacillus bulgaricus and Streptococcus thermophilus, to the mix and culturing it at 38°C (100.4°F) until the acidity of lactic acid reached 1.1%. After homogenizing this yogurt with a homogenizer without applying pressure, it was cooled to 10°C (50°F) while being stirred.

### (2) Preparation of sauce

25.0 weight % of sucrose-added glucose-fructose liquid sugar (BX70), 0.5 weight % of stabilizers (80% of locust bean gum + 20% of LM pectin), 0.5 weight % of an emulsifying agent (glycerin fatty acid ester), 6.0 weight % of 4-times concentrated strawberry juice, 0.1 weight % of flavoring were mixed and dispersed in water and the entire amounted to 100%. After citric acid was added to this mixture to adjust the pH to 3.9, it was heated to 95°C (203°F) to dissolve the above ingredients, deaerated and cooled to 10°C (50°F). The sauce obtained had a Brix degree of 24.8 and a specific gravity of 1.110.

### (3) Preparation of the advance-fermentation type two-layered yogurt in a container .

The advance-fermentation type two-layered yogurt in a container was obtained by filling 85ml of the yogurt prepared in (1) above in a transparent plastic container with 120ml capacity, filling 20ml of the sauce obtained in (2) above on top of the yogurt and sealing the container.

For the advance-fermentation type two-layered yogurt in the container obtained above, no turbidity of the sauce and the yogurt was observed at the time of filling, and even after being stored for two weeks, color run and precipitation of the sauce was controlled.

### Example 3

### (1) Preparation of yogurt

A yogurt mix was prepared, after mixing and dissolving 9 weight % of nonfat milk powder, 2 weight % of salt-free butter, and 3 weight % of sugar, heating the mixture to 60°C (140°F) in hot water, homogenizing the mixture, sterilizing it by keeping it at 95°C (203°F) for five minutes, and rapidly cooling it to 38°C (100.4°F). Yogurt was prepared by adding 3 weight % of a mixed starter which comprised two bacteria, Lactobacillus bulgaricus and Streptococcus thermophilus, to the mix, and culturing it at 38°C (100.4°F) until the acidity of lactic acid reached 1.1%. After homogenizing this yogurt with a homogenizer without applying pressure, it was cooled to 10°C (50°F) while being stirred.

### (2) Preparation of sauce

15.0 weight % of sucrose-added glucose-fructose liquid sugar (BX70), 0.5 weight % of stabilizers (80% of locust bean gum + 20% of LM pectin of), 0.5 weight % of an emulsifying agent (glycerin fatty acid ester), 6.0 weight % of 4-times concentrated strawberry juice, 0.1 weight % of flavoring were mixed and dispersed in water and the entire amounted to 100%. After citric acid was added to this mixture to adjust the pH to 3.9, it was heated to 95°C (203°F) to dissolve the above ingredients, deaerated and cooled to 10°C (50°F). The sauce obtained has a Brix degree of 20.0 and a specific gravity of 1.101.

### (3) Preparation of the advance-fermentation type two-layered yogurt in a container

The advance-fermentation two-layered yogurt in a container was obtained by filling 85ml of the yogurt prepared in (1) above in a transparent plastic container with 120ml capacity, filling 10ml of the sauce obtained in (2) above on top of the yogurt and sealing the container.

For the advance-fermentation type two-layered yogurt in the container obtained above, no turbidity of the sauce and the yogurt was observed at the time of filling, and even after being stored for two weeks, color run and precipitation of the sauce was controlled.

### Example 4

### (1) Preparation of sauce

After mixing 3 weight % of tangerine juice, 50 weight % of tangerine segments, 0.6 weight % of a mixed stabilizer (comprising 20 weight % of guar gurn, 20 weight % of xanthene gurn, and 60 weight % of pectin), 0.2 weight % of an emulsifying agent (glycerin fatty acid ester), 0.05% of sweetener (sucralose), 0.1 weight % of flavoring and 46.05 weight % of water, and dispersing and dissolving the powdered materials into the liquid material, the mixture was sterilized at 95°C (203°F) for 10 minutes, and deaerated and the sauce (with a specific gravity value of 1.03 and a Brix degree of 7.62) was prepared and stored at 10°C (50°F).

### (2) Production of the subsequent-fermentation type two-layered yogurt in a container

A yogurt mix (with a specific gravity value of 1.051 and a Brix degree of 16.23) was prepared by mixing and dissolving 10 weight % of non-fat powdered milk, 2 weight % of salt-free butter, 3 weight % of sugar and 82 weight % of water, heating the mixture in hot water at 60°C (140°F), homogenizing the mixture, sterilizing it by keeping it at 95°C (203°F) for five minutes, and cooling it to 40°C (104°F). 3 weight % of a mixed starter which comprised two bacteria, Lactobacillus bulgaricus and Streptococcus thermophilus, was mixed into this yogurt mix and 85ml of the mix was filled in each often transparent plastic containers with 120ml capacity. 20ml of the sauce prepared in (1) above was filled on top of the yogurt mix in each container, the opening part of the container was sealed with a lid material, the yogurt was fermented at 40°C (104°F) until the acidity of lactic acid reached 1.0% and the subsequent-fermentation type two-layered yogurt in individual containers was produced.

For the subsequent-fermentation type two-layered yogurt in a container obtained above, no turbidity of the sauce and the yogurt mix was observed at the time of filling, and even after being stored for two weeks, color run and precipitation of the sauce was-controlled.

### Example 5

### (1) Preparation of sauce

After mixing 65 weight % of pineapple flesh, 0.21 weight % of a mixed stabilizer (comprising 20 weight % of guar gurn, 20 weight % of xanthene gum and 60 weight % of pectin), 0.035 weight % ot an emulsifying agent (glycerin fatty acid ester), 0.05 weight % of sweetener (sucralose), 0.1 weight % of flavoring and 14.605 weight % of water and dispersing and dissolving the powdered materials into the liquid material, the mixture was sterilized at 95°C (203°F) for 10 minutes, deaerated, and the sauce (with a specific gravity value of 1.024 and a Brix degree of 13.1) was prepared and stored at 10°C (50°F).

### (2) Production of the subsequent-fermentation type two-layered yogurt in a container

A yogurt mix (with a specific gravity value of 1.053 and a Brix degree of 16.65) was prepared by mixing and dissolving 10 weight % of non-fat powdered milk, 2 weight % of salt-free butter, 3 weight % of sugar and 82 weight % of water, heating the mixture in hot water at 60°C (140°F), homogenizing the mixture, sterilizing it by keeping it at 95°C (203°F) for five minutes and cooling it to 40°C (104°F). 3 weight % of a mixed starter which comprised two bacteria, Lactobacillus bulgaricus and Streptococcus thermophilus, was mixed into this yogurt mix and 85ml of the mix was filled in each of ten transparent plastic containers with 120ml capacity. 20ml of the sauce prepared in (1) above was filled on top of the yogurt mix in each container, the openings of the containers were sealed with a lid material, the yogurt was fermented at 40°C (104°F) until the acidity of lactic acid reached 1.01% and the subsequent-fermentation type two-layered yogurt in an individual container was produced.

For the subsequent-fermentation type two-layered yogurt in a container obtained above, no turbidity of the sauce and the yogurt mix was observed at the time of filling, and even after being stored for two weeks, color run and precipitation of the sauce was controlled.

For a conventional two-layered yogurt in a container, sauce is filled in the bottom portion and yogurt is filled over the sauce to prevent the sauce and the yogurt from becoming turbid during the production process and in storage. For this reason, the sauce has to be stirred up from the bottom of the container when eating.

As compared with conventional yogurt types, for the two-layered yogurt in a container according to this invention, because sauce is filled in an upper level and yogurt is filled at the bottom, the yogurt and the sauce can be mixed easily from the top and taste is well balanced. Since the stabilizers and emulsifying agent are mixed simultaneously into the sauce, and at the same time a Brix degree is also set within a specified range, sweetness and richness can be tasted when eating this two-layered yogurt while the sauce does not become turbid with the yogurt and a boundary between the yogurt and the sauce is clear during production, distribution, and storage.

In a method of producing the advance-fermentation type two-layered yogurt in a container according to this invention, yogurt is prepared beforehand and is filled in a container and sauce is filled on top of the sauce. Because of this method, there is no problem as reduced productivity due to more time required for cooling the yogurt during the filling process. hence a two-layered yogurt in a container can be produced continuously.

In a method of producing a subsequent-fermentation type two-layered yogurt in a container according to this invention, a yogurt mix is filled in a container, the sauce is filled over the mix and then the yogurt is fermented. Because there is no need for equipment such as a fermentation tank or for processes such as stirring after fermentation, cooling, storage, and curd shearing, the two-layered yogurt in a container can be produced simply.

## Claims

1. A two-layered yogurt packed in a container, wherein the two-layered yogurt has an upper layer comprising sauce and a lower layer comprising yogurt made from milk, wherein a boundary between the upper layer and the lower layer is dear.

2. The two-layered yogurt according to claim 1, wherein the yogurt is fermented before being filled in the container, and the sauce has a smaller specific gravity than that of the yogurt.

3. The two-layered yogurt according to claim 1 or 2, wherein the sauce has a Brix degree 10∼25 and a specific gravity value of approximately 1.05∼1.11.

4. The two-layered yogurt according to any of the preceding claims, wherein the sauce contains 1.0∼1.5 weight % of stabilizers and 0.1∼1.0 weight % of an emulsifying agent.

5. The two-layered yogurt according to any of the preceding claims, wherein the yogurt is made from a yogurt mix and fermented after being filled in the container, and the sauce has a smaller specific gravity than that of the yogurt mix.

6. The two-layered yogurt according to claim 5, wherein the sauce contains 0.1∼1.5 weight % of stabilizers and 0.01∼1.0 weight % of an emulsifying agent.

7. A method of producing a two-layered yogurt in a container, comprising the steps of: filling yogurt made from milk in a container and filling on top of the yogurt a sauce having a smaller specific gravity than that of the yogurt.

8. The method according to claim 7, wherein the sauce has a Brix degree 10∼25 and a specific gravity value of approximately 1.05∼1.11.

9. The method according to claim 7 or 8, wherein the yogurt is fermented before being filled in the container producing the advance-fermentation type two-layered yogurt in a container, and the sauce contains 1.0∼1.5 weight % of stabilizers and 0.1∼1.0 weight % of an emulsifying agent.

10. A method of producing a two-layered yogurt in a container, comprising the steps of: filling a yogurt mix made from milk in a container, filling on top of the yogurt mix a sauce having a smaller specific gravity than that of the yogurt, and fermenting the yogurt mix.

11. The method according to claim 10, wherein the sauce contains 0.1∼1.5 weight % of stabilizers and 0.01∼1.0 weight % of an emulsifying agent.
